# EUROPÄISCHE PATENTSCHRIFT

(11) **EP 1 095 472 B1**
(45) Veröffentlichungstag und Bekanntmachung des Hinweises auf die Patenterteilung: **17.09.2003**
(21) Anmeldenummer: 99931153.3
(22) Anmeldetag: 23.06.1999
(51) Int. Cl.: H04B 10/08

(54) **VERFAHREN UND ANORDNUNG ZUR DURCHFÜHRUNG VON KONTROLL- UND ÜBERWACHUNGSMESSUNGEN AN OPTISCHEN ÜBERTRAGUNGSSTRECKEN**
METHOD AND DEVICE FOR EXECUTING CONTROL AND MONITORING MEASUREMENTS IN OPTICAL TRANSMISSION PATHS
PROCEDE ET DISPOSITIF POUR EFFECTUER DES MESURES DE CONTROLE ET DE SURVEILLANCE SUR DES LIGNES DE TRANSMISSION OPTIQUE

(30) Priorität: 09.07.1998 DE 19830729
(43) Veröffentlichungstag der Anmeldung: 02.05.2001
(73) Patentinhaber: Deutsche Telekom AG, 53113 Bonn (DE)
(72) Erfinder: VOBIAN, Joachim, D-64367 Mühltal (DE); MÖRL, Klaus, D-07749 Jena (DE)
(74) Vertreter: Mierswa, Klaus
(86) Internationale Anmeldenummer: EP9904361
(87) Internationale Veröffentlichungsnummer: WO00003504

(56) Entgegenhaltungen:
- EP-A- 0 432 734
- EP-A- 0 553 460
- EP-A- 0 681 172
- FR-A- 2 739 992

## Beschreibung

### Technisches Gebiet:

Die Erfindung betrifft ein Verfahren zur Durchführung von Kontrollmessungen an optischen Übertragungsstrecken gemäß dem Oberbegriff von Anspruch 1 sowie ein Verfahren und eine Anordnung zur Durchführung von Überwachungsmessungen an optischen Übertragungsstrecken gemäß den Oberbegriffen von Anspruch 2 bzw. 9.

### Stand der Technik:

Eines der wesentlichen Themen der optischen Nachrichtentechnik ist die Sicherheitsüberwachung optischer Übertragungsstrecken. Um Abhörsicherheit und Datenschutz zu garantieren, sind Verfahren bekannt, die einen erheblichen experimentellen Aufwand voraussetzen, z.B. Überwachung der Einwellenfasern mit Hilfe kryptologischer, insbesondere quantenkryptologischer, Methoden oder unter Ausnutzung der Raman- oder Brillouinrückstreuung. Diese äußerst aufwendigen Verfahren dokumentieren das große Interesse an unbeeinflusster, störungsfreier Nachrichtenübertragung.

Weiterhin ist es zur Aufrechterhaltung eines ordnungsgemäßen Telekommunikationsbetriebs über optische Übertragungsstrecken notwendig, die optischen Übertragsungsstrecken regelmäßig zu kontrollieren und zu überprüfen. Für spezielle Kabel- oder Glasfasern kann eine Dauerüberwachung erforderlich sein. Insbesondere dafür ist es notwendig, daß die Kontrolle der Betriebsstrecke parallel zum normalen Telekommunikationsbetrieb durchfürhrbar ist, ohne diesen zu stören.

Aus der FR 2 739 992 ist ein auf der Auswertung von reflektierten Signalen basierendes Überwachungssystem für ein optisches Telekommunikationsnetz bekannt, wobei Bragg-Gitter zum Einsatz kommen.
Ferner sind aus der EP 0 432 734 eine Vorrichtung und ein Verfahren zur Erkennung von fehlerhaften Stellen oder von Schäden eines optischen Übertragungssystems bekannt.

Diese Systeme arbeiten mit einem zusätzlich eingekopplelten, nach Durchlaufen eines Teiles oder der gesamten Übertragungsstrecke selektiv reflektiertes Signal, dessen Wellenlänge von der Wellenlänge der zu übertragenden Nutzinformation verschieden ist.

Diese Systeme sind weder dazu vorgesehen noch dazu geeignet, die chromatische Dispersion, welcher die durch die Faser laufenden Signale unterworfen sind, zur Kontrolle der optischen Übertragungsstrecke auszunutzen. Sie sind ferner weder dazu vorgesehen noch dazu geeignet, den Polarisationzustand, welchen die Signale nach Durchlaufen der Faser aufweisen, zur Überwachung der optischen Übertragungsstrecke auszunutzen.

### Technische Aufgabe:

Der Erfindung liegt daher die Aufgabe zugrunde, ein Verfahren zur Durchführung von Kontrollmessungen während des normalen Telekommunikationsbetriebs und ohne Beeinträchtigung desselben zur Verfügung zu stellen; wobei die chromatische Dispersion, welcher die durch die Faser laufenden Signale unterworfen sind, zur Kontrolle der optischen Übertragungsstrecke ausgenützt wird.

Der Erfindung liegt ferner die Aufgabe zugrunde, ein Verfahren und eine Meßeinrichtung zur Durchführung von Überwachungsmessungen während des normalen Telekommunikationsbetriebs und ohne Beeinträchtigung desselben zur Verfügung zu stellen, wobei der Polarisationzustand, welchen die Signale nach Durchlaufen der Faser aufweisen, und deren Laufzeit zur Überwachung der optischen Übertragungsstrecke ausgewertet wird.

Dabei soll der technische Aufwand so gering wie möglich gehalten werden. Mit dem Verfahren bzw. der Anordnung sollen wesentliche Betriebsparameter der Übertragungsstrecke erfaßbar sein, weiterhin sollen Manipulationen an der Übertragungsstrecke, insbesondere ein Abhören des Datenverkehrs, zuverlässig detektierbar sein.

### Offenbarung der Erfindung und ihrer Vorteile:

Erfindungsgemäß werden diese Aufgaben gelöst durch ein Verfahren zur Durchführung von Kontrollmessungen gemäß Anspruch 1 sowie ein Verfahren und eine Anordnung zur Durchführung von Überwachungsinessungen an optischen Übertragungsstrecken gemäB der Ansprüche 2 und 9.

Übertragungsstrecken im Sinne der Erfindung sind beispielsweise einzelne optische Fasern oder zu einem Datenkabel zusammengefaßte Faserbündel, aber auch bereits vernetzte Fasern/Kabel oder solche, die durch ein oder mehrere zusätzliche Elemente, wie z. B. Verstärker, unterbrochen sind. Die Übertragungsstrecke hat einen Ein- und einen Ausgang, welche hier die Sende- bzw. Empfangsseite definieren. Sendeseitig werden Daten in Form optischer Signale kodiert (Übertragungssignal), wozu ein Sender mit einer Betriebswellenlänge λ₁ verwendet wird, und in die Übertragungsstrecke eingekoppelt. Der Sender des Übertragungssignals muß sich nicht in unmittelbarer Nähe des sendeseitigen Eingangs der Übertragungsstrecke befinden; es können weitere Übertragungselemente dazwischengeschaltet sein. Empfangsseitig werden die Daten aus der Übertragungsstrecke ausgekoppelt, ausgewertet oder an weitere Übertragungsstrecken weitergeleitet.

Die Betriebswellenlänge ist dabei nicht notwendigerweise genau eine feste Wellenlänge: Übertragungssignals haben aufgrund der zeitlichen Modulation eine gewisse Bandbreite, wobei unter der Betriebswellenlänge die Grundwelenlänge des Übertragunssignals verstanden wird. Weiterhin kann die Übertragungsstrecke im Wallenlängenmultiplexbetrieb (WDM-Betrieb) genutzt werden. Dabei werden mehrere Signale mit unterschiedlichen Grundwellenlängen, die jeweils unterschiedliche, voneinander unabhängige Informationen kodieren, sendeseitig zu einem Übertragungssignal überlagert, übertragen und empfangsseitig wieder getrennt. Die Betriebswellenlänge λ₁ im Sinne der Erfindung ist daher der Wellenlängenbereich, in welchem bei der zu überwachenden Übertragungsstrecke Daten übertragen werden.

Die Erfindung wird im folgenden genauer beschrieben:

Erfindungsgemäß wird ein optisches Kontrollsignal erzeugt mit einer Kontrollwellenlänge λ₂, welche verschieden von der Betriebswellenlänge λ₁ ist. λ₂ ist ebenfalls als Grundwellenlänge des Kontrollsignals zu sehen, welches selbst eine gewisse Bandbreite haben kann. Weiterhin können gleichzeitig auch mehrere Signale mit unterschiedlichen Wellenlängen erzeugt werden, welche nach Art des WDM-Betriebs zu einem Kontrollsignal im Sinne der Erfindung zusammengekoppelt werden.

Die erfindungsgemäße Anordnung weist zur Erzeugung des Kontrollsignals einen Sender auf, welcher gegebenenfalls neben den Sender zur Erzeugung des Übertragungssignals tritt. Das Kontrollsignal wird auf der Sendeseite in die Übertragungsstrecke eingekoppelt. Dabei ist der Einkopplungsmechanismus derart gewählt, daß ein paralleles Einkoppeln des Übertragungssignals möglich ist. Die erfindungsgemäße Anordnung umfaßt dazu einen Koppler, der sendeseitig im Bereich der Übertragungsstrecke angeordnet ist und der die Signale beider Sender in die Übertragungsstrecke einzukoppeln imstande ist. Der Koppler ist beispielsweise ein Multiplexkoppler, wie er auch für den WDM-Betrieb verwendet wird (Y-Koppler). Durch die unterschiedlichen Wellenlängen wird das Übertragungssignal und damit die reguläre Dateneinkopplung nicht gestört.

Das Kontrollsignal wird über die Übertragungsstrecke übertragen, auf der Empfangsseite reflektiert und über die Übertragungsstrecke zurück zur Sendeseite übertragen. Die erfindungsgemäße Anordnung umfaßt dazu eine Reflexionsanordnung, welche auf der Empfangsseite der Übertragungsstrecke angeordnet ist und die Kontrollwellenlänge zu reflektieren imstande ist, wobei das rückreflektierte Kontrollsignal (Reflexionssignal) empfangsseitig wieder in die Übertragungsstrecke eingekoppelt wird.

Die Reflexionsanordnung umfaßt beispielsweise einen dichroitischen Spiegel oder ein dichroitisches Spiegelschichtsystem, welches Strahlung im Bereich der Betriebswellenlänge transmittiert und Strahlung im Bereich der Kontrollwellenlänge reflektiert und am Ausgang der Übertragungsstrecke angeordnet ist. Das Übertragungssignal wird von einem derartigen an die jeweiligen Wellenlängen angepaßten Spiegel mit nur geringer Dämpfung durchgelassen, so daß die reguläre Datenübertragung nicht gestört ist. Gleiches gilt für eine Reflexionsanordnung, die einen in diesem Fall als Demultiplexer verwendeten Multiplexkoppler mit wenigstens zwei wellenlängenabhängigen Ausgängen und einen für die Strahlung im Bereich der Kontrollwellenlänge hochreflektierenden Spiegel umfaßt. Der Ausgang des Multiplexkopplers für Strahlung im Bereich der Betriebswellenlänge ist mit einem Empfänger für Übertragungssignale oder einer weiteren Übertragungsstrecke gekoppelt; am Ausgang für Strahlung im Bereich der Kontrollwellenlänge ist der hochreflektierende Spiegel angeordnet.

Danach wird das rückreflektierte Kontrollsignal (Reflexionssignal) auf der Sendeseite aus der Übertragungsstrecke ausgekoppelt und einer Erfassungseinrichtung zugeführt. Das Einkoppeln der Kontroll- und Übertragungssignale ist im wesentlichen von der Auskopplung des Reflexionssignals unbeeinflußt. Gegebenenfalls ausgekoppeltes Licht der Betriebswellenlänge λ₁ wird unterdrückt.

Das Auskoppeln des Reflexionssignals erfolgt beispielsweise mittels des zur Einkopplung verwendeten (Multiplex-)Kopplers, der für den reflektierten Strahl als Demultiplexer wirkt. In einer anderen vorteilhaften Ausgestaltung umfaßt die erfindungsgemäße Anordnung zur Auskopplung des Reflexionssignals einen Zirkulator, welcher im Bereich des sendeseitigen Endes der Übertragungsstrecke angeordnet ist. Der Zirkulator dient zur sendeseitigen Einkopplung des bereits gemultiplexten Übertragungs- und Kontrollsignals in die Übertragungsstrecke und zur sendeseitigen Auskopplung des Reflexionssignals aus der Übertragungsstrecke. Das Reflexionssignal wird der Erfassungseinrichtung zugeführt.

Die Erfassungseinrichtung gibt schließlich gemäß einer ertsten Variante ein Ausgangssignal ab, welches ein Maß für die Intensität und/oder den Polarisationszustand, gegebenenfalls als Funktion der Zeit, und/oder die Signallaufzeit des Reflexionssignals ist und aus welchem Übertragungseigenschaften der Übertragungsstrecke und/oder Änderungen der Übertragungseigenschaften, insbesondere durch Manipulationen an der Übertragungsstrecke, bestimmbar sind, wobei durch Auswertung des Reflexionssignals die chromatische Dispersion der Faser, insbesondere die Nulldispersionswellenlänge λ₀ und der Anstieg der Dispersionskurve bei λ₀und/oder die Dispersionswerte im zweiten oder dritten optischen Fenster bestimmt wird.

Die Erfassungseinrichtung umfaßt dazu vorzugsweise einen Detektor, der Strahlung der Kontrollwellenlänge zu detektieren imstande ist und ein intensitätsabhängiges elektrisches Ausgangssignal abgibt. Vorzugsweise umfaßt die Erfassungseinrichtung zudem wenigstens ein polarisationsempfindliches Element, wie Polarisator, Polarisationsstrahlteiler, polarisierender Faserkoppler, insbesondere aber ein Polarimeter, zur Erfassung von wenigstens einer Komponente des Stokesvektors, vorzugsweise des gesamten Polarisationszustands des Reflexionssignals. Die Erfassungseinrichtung kann weiterhin eine Datenverarbeitungsanlage zur weiteren Auswertung der Detektorsignale umfassen.

Gemäß einer zweiten Variante gibt die Erfassungseinrichtung schließlich ein Ausgangssignal ab, welches ein Maß für die Intensität und den Polarisationszustand, gegebenenfalls als Funktion der Zeit, und die Signallaufzeit des Reflexionssignals ist und aus welchem Übertragungseigenschaften und/oder Änderungen der Übertragungseigenschaften der Übertragungsstrecke, insbesondere durch Manipulationen an der Übertragungsstrecke, bestimmbar sind.

Die Erfassungseinrichtung umfaßt dazu vorzugsweise einen Detektor, der Strahlung der Kontrollwellenlänge zu detektieren imstande ist und ein intensitätsabhängiges elektrisches Ausgangssignal abgibt. Die Erfassungseinrichtung umfaßt zudem wenigstens ein polarisationsempfindliches Element, wie Polarisator, Polarisationsstrahlteiler, polarisierender Faserkoppler oder ein Polarimeter, zur Erfassung von wenigstens einer Komponente des Stokesvektors, vorzugsweise des gesamten Polarisationszustands des Reflexionssignals. Die Erfassungseinrichtung kann weiterhin eine Datenverarbeitungsanlage zur weiteren Auswertung der Detektorsignale umfassen.

Die erfindungsgemäßen Verfahren sind ohne großen Aufwand zur ständigen oder zeitweisen Kontrolle bzw. Sicherheitsüberwachung installierter Telekommunikationskabel bzw. einzelner Fasern derselben geeignet. Ein Vorteil dieser Verfahren ist, daß die Kontroll- bzw. Überwachungsmessungen auf der Sendeseite des Übertragungssystems erfolgen, wo im allgemeinen auch das aufwendige Sendesystem installiert ist. Der Platzbedarf, den die er findungsgemäße Anordnung dazu erfordert, ist außerordentlich gering. Das gilt auch für den technischen Aufwand.

Ein weiterer großer Vorteil der Erfindung liegt darin, daß die Kontroll- bzw. Überwachungsmessungen in keiner Weise den normalen Datentransfer behindern, dieser läuft parallel weiter. Wesentlich ist auch, daß die verwendeten optischen Komponenten kostengünstig sind, wodurch der finanzielle Aufwand, verglichen mit anderen bekannten Verfahren, gering bleibt.

Kurzbeschreibung der Zeichnung, wobei zeigen:
- Figur 1: den prinzipiellen Aufbau einer Anordnung zur Durchführung von Kontroll- und Überwachungsmessungen;
- Figur 2: schematisch eine untersuchte, Kontrollierte Übertragungsstrecke, welche mit einer weiteren Übertragungsstrecke gekoppelt ist;
- Figur 3: OTDR-Messungen an einer Übertragungsstrecke;
- Figur 4 a,b: Fluktuationen der Stokes-Parameter einer ungestörten (a) und einer gestörten (b) Faserstrecke als Funktion der Zeit;

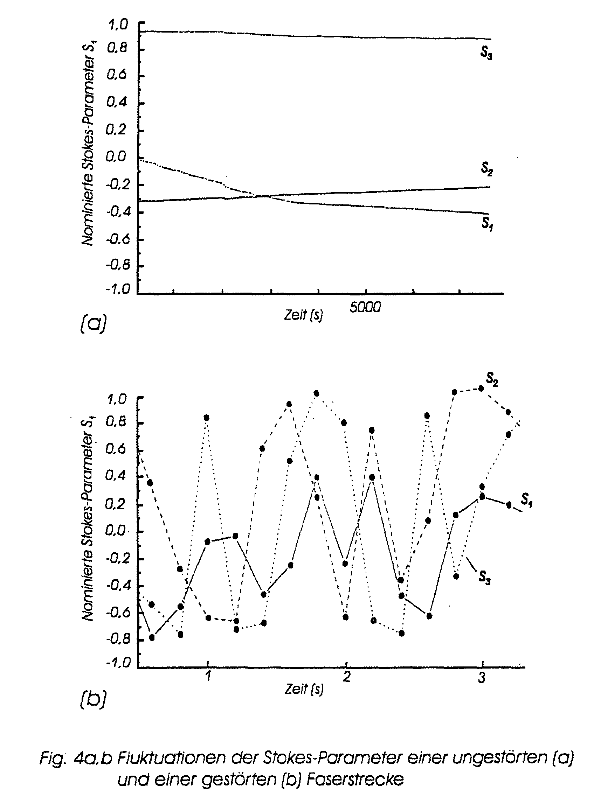

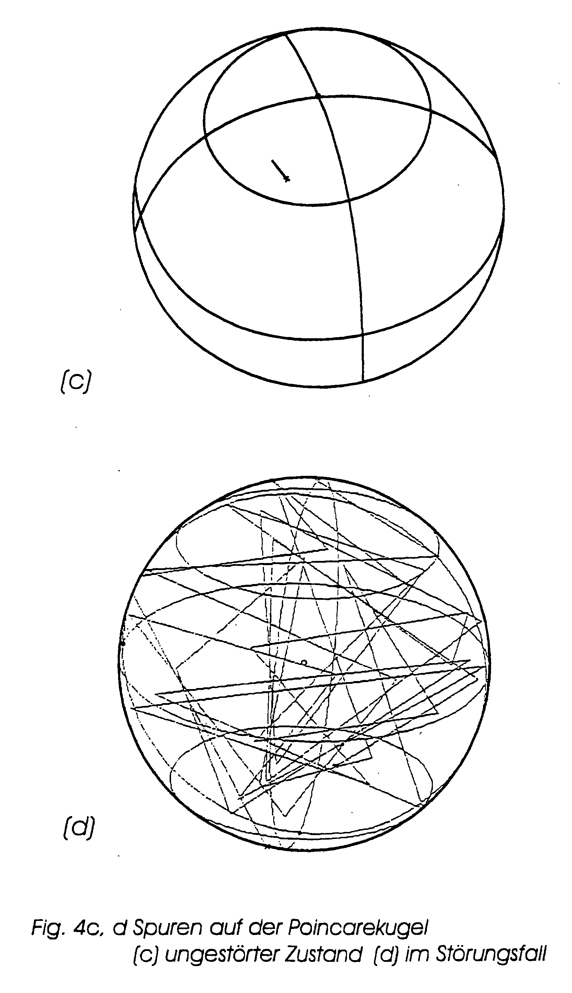

- Figur 4 c,d: Darstellung des Polarisationszustands des Reflexionssignals auf der Poincarekugel im ungestörten Zustand (c) sowie im Störungsfall (d);

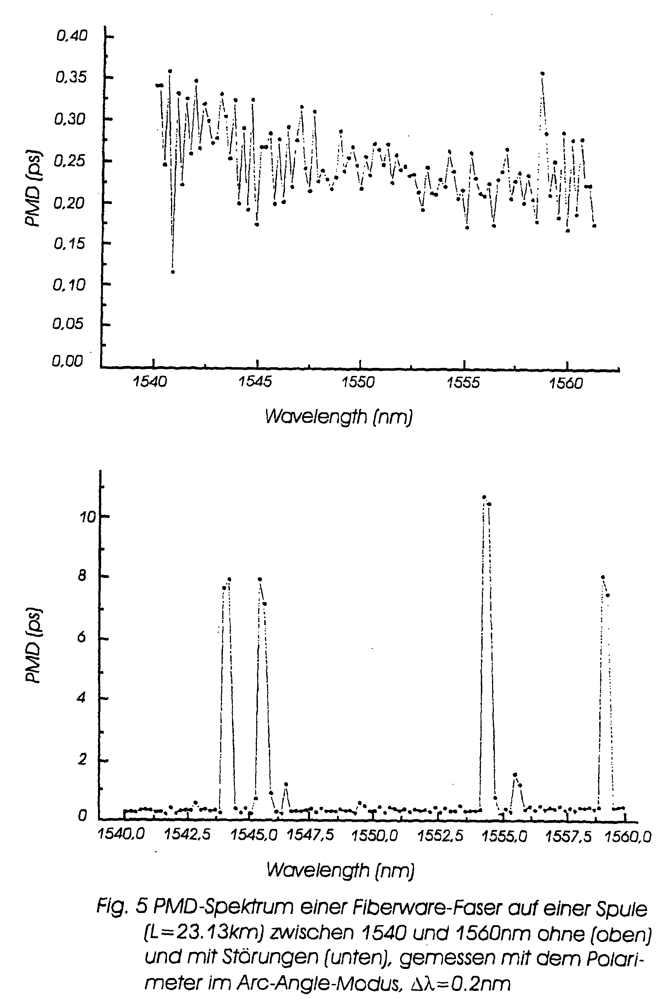

- Figur 5: die Polarisationsmodendispersion einer Faser als Funktion der Wellenlänge im ungestörten bzw. gestörten Zustand.

### Wege zur Ausführung der Erfindung:

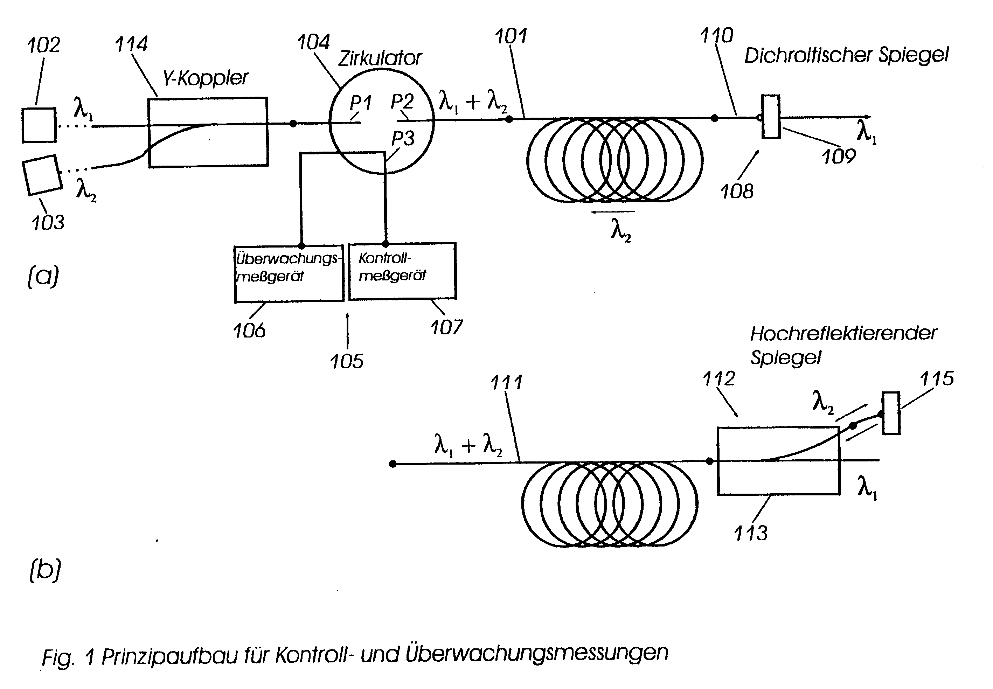

Figur 1 zeigt das Prinzip eines erfindungsgemäßen Aufbaus für Kontroll- bzw. Überwachungsmessungen an einer optischen Übertragungsstrecke 101 bzw. 111. Die Figur 1b stellt eine Alternative zur Realisierung der Erfindung auf der Empfangsseite gemäß Fig. 1a dar; der linke (sendeseitige) Teil der erfindungsgemäßen Anordnung aus Fig. 1b entspricht dem aus Fig. 1a und ist nicht dargestellt.

Neben dem optischen Übertragungssignal mit der Betriebswellenlänge λ₁, das von einem Sender 102 erzeugt wird, wird ein Kontrollsignal mit der Kontrollwellenlänge λ₂ von einem zweiten Sender 103 erzeugt und in einen Koppler 114 eingekoppelt. Der Koppler 114 ist ain breitbandiger Y-Koppler, z.B. ein Multiplexkoppler. Ausgangsseitig ist der Koppler 114 mit einem Zirkulator 104 über dessen Port P1 verbunden. Der Port P2 des Zirkulators 104 wird mit dem Eingang der zu testenden Übertragungsstrecke 101 gekoppelt, z.B. zusammengesteckt oder gespleißt. Mit dem dritten Port P 3 des Zirkulators 104 ist die Erfassungseinrichtung 105 verbunden, welche hier zur Durchführung von Kontroll- und Überwachungsmessungen aus einem Überwachungsmeßgerät 106 und einem Kontrollmeßgerät 107 besteht.

Der Zirkulator hat die Eigenschaft, am Port P1 eingekoppeltes Licht weitgehend verlustfrei zum Port P2 durchzulassen, die Übertragung zum Port P3 jedoch extrem zu dämpfen. Am Port P2 eingekoppeltes Licht wird dagegen zum Port P 3 geleitet, wobei die Übertragung von P2 nach P1 extrem gedämpft ist Damit wirkt der Zirkulator 104 als optisches Ventil, welches Strahlung je nach Ausbreitungsrichtung in unterschiedliche Ausgangskanäle leitet.

Am Ausgang der Übertragungsstrecke 101 bzw. 111 ist eine Reflexionsanordnung 108 bzw. 112 angebracht, die zur Reflexion des Kontrollsignals mit der Kontrollwellenlänge λ₂, dient. Die Reflexionsanordnung 108 besteht in Fig. 1a aus einem kurzen Glasfaserstück 110, an dessen hinterem Ende ein dichroitischer Spiegel 109 angebracht ist. Das vordere Ende des Glasfaserstücks 110 ist beispielsweise mit einem optischen Stecker versehen, mit welchem es mit dem empfangsseitigen Ausgang der Übertragungsstrecke zusammengesteckt wird. Der dichroitische Spiegel 109 reflektiert im Bereich der Kontrollwellenlänge λ₂, vorzugsweise mit einem Reflexionsgrad von mehr als 95 %, idealerweise mehr als 99 %, und transmittiert im Bereich der Betriebswellenlänge λ₁, vorzugsweise mit einem Transmissionsgrad von wenigstens 95 %.

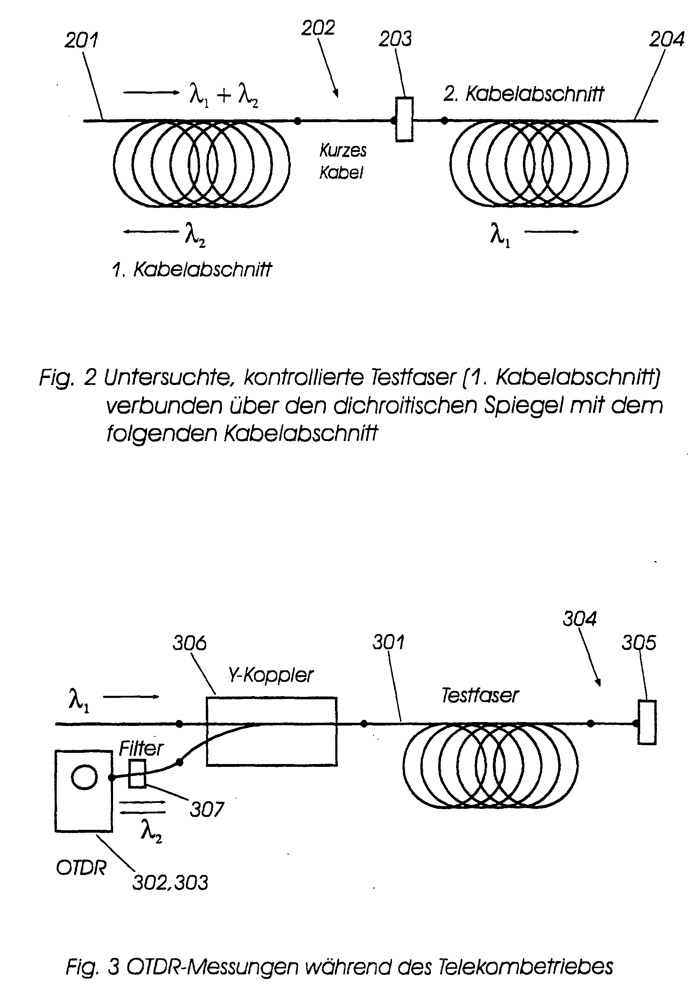

Der dichroitische Spiegel 109 kann in eines speziellen Stecker integriert sein, z.B. indem auf die Stirnfläche des Steckers eines dichroitisches Spiegelachichtsystem aufgeklebt ist. Das dichroitische Spiegelschichtsystem ist so ausgelegt, daß die Betriebswellenlänge λ₁ mit hohem Transmissionsgrad den Spiegel passieren kann. Das Übertragungssignal wird dann folgendem Kabelabschnitt zugeführt, siehe z.B. Figur 2, oder von einem Empfänger empfangen und ausgewertet. Die Kontrollwellenlänge λ₂ hingegen wird mit hohem Wirkungsgrad reflektiert. Mit Hilfe der nur geringfügig gedämpften Betriebswellenlänge wird der Betriebsverkehr aufrechterhalten, die reflektierte Kontrollwellenlänge hingegen dient sendeseitig zur kontinuierlichen Überwachung der Übertragungsstrecke 101 und für Kontrollmessungen.

In Figur 1 b ist eine alternative Realisierung einer Reflexionsanordnung 112 dargestellt. Die Reflexionsanordnung 112 umfaßt in diesem Fall einen Koppler 113, welcher als Demultiplexer füngiert. Das Übertragungssignal mit der Betriebsweilenlänge λ₁ wird über einen Arm des Kopplers 113 dem nächsten Kabelabschnitt oder einem Empfänger zugeführt. Das Kontrollsignal hingegen wird im zweiten Arm des Kopplers geführt, an dessen Ausgang ein - wenigstens im Bereich der Kontrollwellenlänge - hachreflektierender Spiegel 115 angeordnet ist. Der Spiegel 115 ist vorzugsweise als hochreflektierender Faserstecker ausgerührt, welcher an den entsprechenden Ausgang des Demultiplexers 113 angekoppelt wird. Das Kontrollsignal wird an diesem Spiegel 115 derart reflektiert, daß es empfangsseitig wieder in die Übertragungsstrecke 111 eingekoppelt wird, auf Port P2 des Zirkulators 104 fällt, und schließlich zur Erfassungseinrichtung 105 übertragen wird.

Die reflektierte Strahlungsleistung wird am Port P3 des Zirkulators 104 ausgekoppelt und als Reflexionssignal der Erfassungseinrichtung 105 bzw. einem der Meßgeräte 106, 107 zugeführt. Anhand des Reflexionssignals können Kontroll- und Überwachungsmessungen aller Art durchgeführt werden, ohne daß der eigentliche Telekommunikafcionsbetrieb gestört oder beeinfiußt wird.

Der Koppler 114 ist vorzugsweise breitbandig und für Wellenlängen im Bereich von 1.300 bis 1.650 nm geeignet. Die Einfügeverluste sind vorzugsweise geringer als 0,2 dB. Der Zirkulator ist, falls er universell verwendet werden soll, möglichst breitbandig. Ansonsten kann ein Zirkulator für jedes der beiden optischen Fenster verwendet werden. Die Einfügeverluste sind im ersten Fall vorzugsweise geringer als 0,8 dB, im zweiten Fall geringer als 0,6 dB. Die Isolationswerte für eine Übertragung von Port P 2 nach P 1 und Port P 3 nach P 2 sind ün ersten Fall vorzugsweise größer als 35 dB, im zweiten Fall vorzugsweise größer als 45 dB. Die Directivity beträgt vorzugsweise wenigstens 60 dB, entsprechend einer sehr hohen Isolation auf dem direkten Weg von Port P 1 nach P 3.

Die Betriebswellenlänge λ₁ liegt je nach Betriebssystem im zweiten oder dritten optischen Fenster, also um 1300 bzw. 1550 nm. Für die Kontrollwellenlänge λ₂ gibt es keine prinzipiellen Einschränkungen. Vorzugsweise ist sie größer als die Betriebswellenlänge, liegt beispielsweise oberhalb von 1600 nm. Bei den herkömmlichen optischen Standardfasern mit einer Grenzwellenlänge von etwa 1300 nm läuft bei einer solch großen Wellenlänge ein beträchtlicher Teil des Kontrollsignals im Fasermantel. Dadurch wird die Faser sehr empfindlich gegen Biegungen der Faser bzw. des Kabels, wodurch die Empfindlichkeit des Meßverfahrens erhöht ist. Um hohe Faserdämpfung zu vermeiden, solite die Kontrollwellenlänge allerdings nicht zu groß gewählt werden, sondern vorzugsweise noch im dritten optischen Fenster liegen.

Die Sender 102 und 103 für das Übertragungssignal bzw. das Kontrollsignal sind Strahlungsquellen, die optische Signale mit hoher Strahlqualität erzeugen. Vorzugsweise finden Infrarotlaser Anwendung, z.B. Farbstofflaser oder Laserdioden. Das Kontrollsignal wird im Puls- oder im Dauerstrichbetrieb erzeugt. Gegebenenfalls kann dem Kontrollsignal auch zusätzliche Information aufmoduliert sein, was z.B. für Bitfehlerratenmessungen vorteilhaft ist. Das Kontrollsignal kann zur Durchführung von wellenlängenabhängigen Messungen, z.B. Messung der spektralen Polarisationsmodendispersion (siehe Figur 4), auch hinsichtlich der Kontrollwellenlänge durchgestimmt werden. - Dazu werden beispielsweise thermisch durchstimmbare DFB-Halbleiter oder durchstimmbare External-Cavity-Laser verwendet

Bei der Verbindung zwischen Port P2 des Zirkulators 104 und der Übertragungsstrecke 101 sowie bei sämtlichen anderen optischen Kopplungen innerhalb des Ausbreitungswegs des Übertragungssignals sollten Reflexionen vermieden werden. Dazu werden die optischen Verbindungen vorzugsweise als Spleißverbindung ausgeführt. Falls eine Steckverbindung nötig ist, sollte innerhalb des Steckers Immersionsöl verwendet werden. Vorzugsweise beträgt die Reflexion an den Kopplungsstellen weniger als 1 %.

Figur 2 zeigt schematisch, wie eine untersuchte, kontrollierte Übertragungsstrecke 201,die einen ersten Kabelabschnitt bildet, über einen dichroitischen Spiegel 203 mit einer weiteren Übertragungsstrecke 204 verbunden ist, welche einen zweiten Kabelabschnitt bildet. Der dichroitische Spiegel 203 ist dabei wie in Figur 1a Hauptbestandteil der Reflexionsanordnung 202, mit welcher die Kontrollwellenlänge λ₂ reflektiert, das eigentliche Übertragungssignal mit der Wellenlänge λ₁ jedoch weitgehend unbeeinflußt zum zweiten Kabelabschnitt übertragen wird. Anstelle der zweiten Übertragungsstrecke 204 kann sich hinter dem dichroitischen Spiegel 203 jedes beliebige andere Element anschließen, welches empfangsseitig in optischen Übertragungssystemen Verwendung findet.

Mit dem optischen Aufbau gemäß der Figuren 1a und 1b sind Kontroll- bzw. Überwachungsmessungen auch während des regulären Telekommunikationskationsbetriebs weitgehend störungsfrei durchführbar. Unter Kontrollmessungen werden dabei solche Messungen verstanden, welche der Kontrolle der Übertragungseigenschaften der Übertragungsstrecke dienen. Dazu gehört die Messung bzw. die Überprüfung bestimmter Faserparameter, z.B. die chromatische Dispersion mit ihren essentiellen Parametern, wie die Nulldispersionswellenlänge λ₀,der Anstieg der Dispersionskurve bei λ₀ oder die Dispersionswerte im zweiten und dritten optischen Fenster, die spektrale Streckendämpfung, die Polarisationsmodispersion oder auch Bitfehlerratenmessungen.

Überwachungsmessungen sind demgegenüber Messungen, die für die Sicherheit des Übertragungssystems relevant sind. Mit Überwachungsmessungen lassen sich beispielsweise Manipulationen an der Übertragungsstrecke detektieren. Somit läßt sich beispielsweise ein "Abhören" des Datenverkehrs durch Abzweigen auch nur geringster Leistungen anzeigen.

Beide Arten von Messungen unterliegen keinen prinzipiellen Einschränkungen, zumal der Vorzug des Verfahrens ausgenutzt werden kann, daß alle Sende- und Meßeinrichtungen auf der Sendeseite untergebracht sind und somit sämtliche Daten unmittelbar zur Auswertung zur Verfügung stehen. Empfangsseitig muß lediglich für die Reflexion des Kontrollsignals gesorgt werden.

So sind als Kontrollemessungen beispielsweise kontinuierliche Lebensdauermessungen problemlos und störungsfrei durchführbar. Aus Vergleich von Reflexions- und ursprünglich erzeugtem Kontrollsignal, z.B. hinsichtlich Polarisation, Laufzeit, Signalform, Amplitude bzw. Intensität, kann auf eine Vielzahl von Parametern der Übertragungsstrecke geschlossen werden. Diese Messungen sind durch Wahl einer geeigneten Erfassungseinrichtung-die die jeweils interessierenden Größen zu detektieren imstande ist, mit einem Aufbau nach Fig. 1 durchführbar.

Weiterhin sind als Kontrollmessungen auch direkte Faserlängenmessungen der Fasern eines Kabels möglich. Es ist bekannt, daß die optische Faserlänge erheblich größer ist als die entsprechende Kabellänge, außerdem sind auch die Längen der einzelnen Fasern eines Kabels unterschiedlich lang. Diese Messungen gestalten sich sehr einfach und werden beispielsweise mit einem erfindungsgemäßen Aufbau nach Figur 3 durchgeführt.

Figur 3 zeigt dazu ein Übertragungssystem, bestehend aus einer Übertragungsstrecke 301, über welche ein Übertragungssignal mit der Wellenlänge λ₁ übertragen wird. Das Übertragungssignal kommt von einem Sender, gegebenenfalls über einen anderen Teil des Übertragungssystems (andere Faserstrecke). Erfindungsgemäß wird über die Übertragungsstrecke 301 ein Kontrollsignal der Wellenlänge λ₂ übertragen zur Messung von Eigenschaften der Übertragungsstrecke 301. Das Kontrollsignal wird von einem Optical Time Domain Reflectometer (OTDR) erzeugt, welcher mit einem Sender 302 der Kontrollwellenlänge λ₂ ausgestattet ist.

Das Kontrollsignal wird zusammen mit dem Übertragungssignal mittels eines Kopplers 306 in die Übertragungsstrecke 301 eingekoppelt. Es wird nach Durchlaufen der Übertragungsstrecke 301 an einen Spiegel 305, der am Ausgang der Übertragungsstrecke 301 angeordnet ist, reflektiert, wobei das Übertragungssignal transmittiert wird. Als Reflexionsanordnung kommt auch wieder die in Fig. 1a dargestellte Alternative in Frage.

Der Zirkulator aus dem Aufbau nach Fig. 1 ist bei der optischen Anordung nach Fig. 3 nicht notwendig da der OTDR als Empfänger 303 das rückgestreute Licht mit λ₂ auswertet. Ein einfacher Bandpaßfilter 307 vor dem Ein- bzw. Ausgang des OTDR unterdrückt die rückgestreute Strahlung mit λ₁.Das Aufbauprinzip ist in Fig. 3 dargestellt.

Der OTDR erzeugt ein kurzes Kontrollsignal mit λ₂ und wertet das rückreflektierte Signal aus. Aus der zeitlichen Differenz zwischen Erzeugung des Kontrollsignals und Empfang des Reflexionssignals wird die optische Länge der Übertragungsstrecke ermittelt. Wenn man die OTDR gemessene rückgestreute Leistung logarithmisch über den optischen Weg in der Testfaser aufträgt, erhält man eine abfallende Gerade (negative Steigung). Das Faserende wird durch den auftretenden Fresnelimpuls definiert. Stufen in der abfallenden Geraden zeigen Spleiße an, die Stufenhöhe ist ein Maß für die Spleißdämpfüng. Faserbrüche oder -fehlstellen erzeugen Fresnelreflexionen, die so genau lokalisiert werden können. Der Zusammenhang zwischen der gemessenen Gruppenlaufzeit t_{g} und der Faserlänge L ist L = t_{g} c/n_{g}, d.h. bei genauer Kenntnis n_{g} kann L, bzw. jeder Ortsabstand in der Faser exakt bestimmt werden. Durch spezielle Meßanordnungen kann mit dem OTDR auch die örtlich verteilte PNID gemessen werden.

Neben den Kontrollmessungen sind auch sicherheitsrelevante Überwachungsmessungen mit der Erfindung auf einfache Weise ohne großen technischen. Aufwand durchführbar. Für Überwachungsmessungen wird beispielsweise der Aufbau nach Fig. 1 verwendet.

Bei einem ersten Verfahren wird die relative Dämpfung des Kontrollsignals sendeseitig unter Zuhilfennahme der Erfassungseinrichtung 105 bestimmt. Dazu wird vorgeschlagen, nach der Meßmethode nach Heitmann zu verfahren (W. Heitmann, Precision Single-Mode Fiber Spectral Attenuation Measurements, J. Opt. Comm., Vol 8 (1987), No. 1 p. 2; W. Heitmann Attenuation Analysis of Silica-Based Single-Mode Fibers, J. Opt. Comm., Vol 11 (1990), No. 4 p. 122).

Da aber nicht die absoluten Dämpfungswerte interessieren, sonderen nur kleine Änderungen der Dämpfung, ist es nicht notwendig, die sogenannte Rückschneidemethode zu praktizieren. Bei der Rückschneidemethode wird nach einer Transmissionsmessung die Faser einige Meter hinter der Einkoppelstelle abgeschnitten und die Transmissionsleistung erneut gemessen. Die Dämpfung kann mit hoher Genauigkeit gemessen werden, wenn die Einkoppelbedingungen des Kontrollsignals konstant gehalten werden (max. 0,001 dB). Jeder Eingriff, der an der entsprechenden Übertragungsstrecke bzw. Faser derselben vorgenommen wird, wird durch die Messung der Dämpfung detektiert. Ein Anzapfen einer Leitung zu Abhörzwecken bedingt ein Auskoppeln von Lichtleistung über den Fasermantel. Durch Messung der Dämpfung lassen sich selbst die dadurch bedingte Abzweigung sehr kleiner Lichtleistungen von minimal 0,002 dB erfassen.

Es ist nicht notwendig, in diesem Fall die Dämpfungsmessung spektral durchzuführen; eine Messung für die Kontrollwellenlänge ist ausreichend. Die Kontrollwellenlänge sollte möglichst groß gewählt werden, denn bei großen Wellenlängen im Monomodebereich wird ein erheblicher Teil der Lichtleistung im Fasermantel geführt, wodurch Dämpfungsänderungen durch Hantieren an der Faser größer und damit zuverlässiger detektierbar werden. Die Kontrollwellenlänge sollte allerdings nur so groß gewählt werden, daß die Dämpfungsverluste über die gesamte Übertragungsstrecke im Normalfal, d.h. ohne Eingriff von außen, noch vertretbar sind.

Eine weitere Methode zur Durchführung einer Überwachungsmessung mittels der Ernndung basiert auf der Tatsache, daß der Polarisationszustand (SOP) eines über eine Faserstrecke übertragenen Signals empfindlich von Biegungen und Erschütterungen der Faser abhängt: Durch Manipulieren an der Faser wird lokal deren Doppelbrechung geändert, wodurch sich auch der Polarisationszustand des Signals schlagartig ändert. Diese Methode ist weitaus empfindlicher als die Dämpfungsmethode und macht ein unentdecktes Hantieren am Kabel weitgehend unmöglich.

Diese Änderung des SOP kann beispielsweise mit Hilfe eines Polarimeters leicht nachgewiesen werden, indem der Stokesvektor auf der Poincarekugel dargestellt wird. Der prinzipielle Aufbau zur Streckenüberwachung durch Beobachtung des Polarisationszustands mit Hilfe eines polarisationssensiblen. Überwachungsgeräts 106 ist in Fig. 1a,b skizziert. In Fig. 4a ist der zeitliche Verlauf der drei Komponenten S₁, S₂, S₃ des Stokesvektors im ungestörten Zustand dargestellt, die Meßzeit ist 8000 s. In Fig. 4b ist der zeitliche Verlauf der Stokeskomponenten innerhalb von nur 3s im Störungsfalle gezeigt. Das Bild dokumentiert eindrucksvoll den dramatischen Einfluß von Störungen auf den zeitlichen Verlauf des SOP. Das wird ebenso eindrucksvoll bestätigt durch die korrespondierende Darstellung auf der Poincarekugel gemäß der Figuren 4c und 4d.

Fig. 4c zeigt die langsame Drift des SOP auf der Kugelaberfläche im ungestörten Zustand (Meßzeit wiederum 8000s), während in Fig. 4d der Störungsfall gezeigt wird (Meßzeit 3s), in dem der Stokesvektor über den gesamten Bereich der Kugeloberfläche erheblich fluktuiert. Man beachte den großen Unterschied der Beobachtungszeit, zum einen 8000s, zum anderen nur 3s.

Zum Nachweis der Änderung des SOP gibt es mehrere Möglichkeiten.
a) Die aufwendigste Methode wurde bereits erwähnt. Mit Hilfe eines Polarimeters wird der vollständige Polarisationszustand erfaßt. Im ungestörten Betrieb ändert sich der SOP, z. B. als Folge thermischer Einflüsse, sehr langsam und stetig (siehe Fig. 4a und 4c). Der Punkt auf der Oberfläche der Poincarekugel, der den jeweiligen Polarisationszustand repräsentiert, driftet langsam in eine beliebige Richtung. Wird hingegen die Faser berührt, erfolgt eine sprunghafte Veränderung der Position des Punktes, beim Hantieren an der Faser ändert sich die Bewegung des SOP-Punktes in Richtung und Betrag nahezu in statistischer Weise (siehe Fig. 4b und 4d). Dieser Prozeß ist so auffällig, daß er sofort ins Auge fällt und detektierbar ist.
   Die sprunghafte Änderung des SOP aufgrund einer äußeren Störung äußert sich auch in einer erhöhten Polarisationsmodendispersion (PMD) und ist durch Messung der PMD detektierbar. Fig. 5 zeigt dazu den spektralen Verlauf der Polarisationsmodendispersion in ps zwischen 1540 und 1560 nm ohne Störung (oben) und mit Störung (unten), die durch Berührung der Testfaser, in diesem Fall einer 23.13km lange Glasfaser auf einer Spule, verursacht wurde. Durch die Störungen bei 1545, 1555 und 1559nm erhöhen sich die PMD-Werte um einen Faktor bis zu 25 in diesem Fall. Fig. 5 dokumentiert den starken Einfluß von Störungen sogar auf die PMD. Als Meßverfahren im Sinne der hier vorgestellten Arbeit kommt diese Methode nur in Betracht, wenn die Kontrollwellenlänge mit Hilfe eines durchstimmbaren Lasers variiert und das zeitliche Auseinanderlaufen des Signals als Funktion der Wellenlänge aufgezeichnet wird. Dies ist allerdings, bedingt durch das notwendige Durchstimmen des Lasers, für Routinemessungen in der Regel zu zeitaufwendig.
b) Zur Feststellung der Veränderung des SOP ist seine vollständige Bestimmung durch die drei normierten Stokesparameter mit Hilfe eines Polarimeters nicht unbedingt erforderlich. Im allgemeinen ist zur Detektierung der Veränderung des SOP die Erfassung von einer oder zwei Komponenten des Stokesvektors ausreichend (s. Fig. 4a,b). Deshalb wird für eine weniger aufwendige Variante das Polarimeter durch ein polarisationsempfindliches Element (Polarisator, Polarisationsstrahlteiler, polarisationsabhängiger Faserkoppler usw.) ersetzt. Die diese Komponenten passierenden Strahlungsanteile werden detektiert und die entsprechenden Detektorspannungen ausgewertet. Solange die Faser ungestört im Kabel ruht, ändert sich die Detektorspannung nur sehr langsam und stetig. bei Störungen, Manipulationen hingegen erfolgt eine plötzliche und starke Änderung. Für die automatische Überwachung ist daher ein Diskriminator vorteilhaft, um diese sehr unterschiedlichen Effekte zu unterscheiden. Dies kann beispielsweise ein Frequenzfilter sein, der niedrige Frequenzen (beipielsweise <0.1 Hz) eliminiert. Zur Erhöhung der Auswertesicherheit wird neben dem Frequenzfilter ein Schwellenwertschalter eingesetzt, der verhindert, daß kleine, rauschartige Spannungswerte ausgewertet werden, die auch sehr hohe Frequenzkomponenten enthalten. Nur Amplituden oberhalb des Schwellenwertes, der variabel einstellbar sein sollte, werden aufgezeichnet.

### Liste der Bezugszeichen:

- 101, 111, 201, 301: Übertragungsstrecke (Teststrecke)
- 102: Sender (Übertragungssignal)
- 103, 302: Sender (Kontrollsignal)
- 104: Zirkulator
- 105, 303: Erfassungseinrichung
- 106, 107: Übervachungs- bzw. Kontrollmeßgerät
- 108, 112, 202, 304: Reflexionsanordnung
- 109, 203: dichroitischer Spiegel
- 110: Kabelstück
- 113, 114, 306: Koppler
- 115, 305: Spiegel
- 204: weitere, nicht zu testende Übertragungsstrecke
- 307: Filter

## Patentansprüche

1. Verfahren zur Durchführung von Kontrollmessungen an optischen Übertragungsstrecken (101, 111, 201, 301), wie einzelnen optischen Fasern oder Faserbündeln, mit einer Sende- und einer Empfangsseite, wobei
ein Übertragungssignal über die Übertragungsstrecke in Form optischer Signale mit einer Betriebswellenlänge λ₁ übertragen wird,
ein optisches Kontrollsignal mit einer Kontrollwellenlänge **λ**₂,welche verschieden von der Betriebswellenlänge λ₁ ist, auf der Sendeseite in die Übertragungsstrecke eingekoppelt wird, wobei der Einkopptungsmechanismus derart gewählt ist, daß ein paralleles Einkoppeln des Übertragungssignals möglich ist,
das Kontrollsignal auf der Empfangsseite reflektiert und über die Übertragungsstrecke zurück zur Sendeseite übertragen wird, und
das durch das rückreflektierte Kontrollsignal gebildete Reflexionssignal auf der Sendeseite aus der Übertragungsstrecke ausgekoppelt und einer Erfassungseinrichtung (105, 303) zugeführt wird, wobei das Einkoppeln der Kontroll- und Übertragungssignale im wesentlichen von der Auskopplung des Reflexionssignals unbeeinflußt ist und gegebenenfalls ausgekoppeltes Licht der Betriebswellenlänge λ₁ unterdrückt wird, wobei
a) die Erfassungseinrichtung ein Ausgangssignal abgibt, welches ein Maß für die Intensität und/oder den Polarisationszustand, gegebenenfalls als Funktion der Zeit, und/oder die Signallaufzeit des Reflexionssignals ist und aus welchem Übertragungseigenschaften der Übertragungsstrecke und/oder Änderungen der Übertragungseigenschaften, insbesondere durch Manipulationen an der Übertragungsstrecke, bestimmbar sind, und
b) durch Auswertung des Reflexionssignals die chromatische. Dispersion der Faser, insbesondere die Nulldispersionswellenlänge λ₀ und der Anstieg der Dispersionskurve bei λ₀ und/oder die Dispersionswerte im zweiten oder dritten optischen Fenster, bestimmt wird.

2. Verfahren zur Durchführung von Überwachungsmessungen an optischen Übertragungsstrecken (101, 111, 201, 301), wie einzelnen optischen Fasern oder Faserbündeln, mit einer Sende- und einer Empfangsseite, wobei ein Übertragungssignal über die Übertragungsstrecke in Form optischer Signale mit einer Betriebswellenläng λ₁ übertragen wird,
ein optisches Kontrollsignal mit einer Kontrollwellenlänge λ₂, welche verschieden von der Betriebswellenlänge λ₁ ist, auf der Sendeseite in die Übertragungsstrecke eingekoppelt wird, wobei der Einkopplungsmechanismus derart gewählt ist, daß ein paralleles Einkoppeln des Übertragungssignals möglich ist,
das Kontrollsignal auf der Empfangsseite reflektiert und über die Übertragungsstrecke zurück zur Sendeseite übertragen wird,
das durch das rückreflektierte Kontrollsignal gebildete Reflexionssignal auf der Sendeseite aus der Übertragungsstrecke ausgekoppelt und einer Erfassungseinrichtung (105, 303) zugeführt wird, wobei das Einkoppeln der Kontroll- und Übertragungssignale im wesentlichen von der Auskopplung des Reflexionssignals unbeeinflußt ist und gegebenenfalls ausgekoppeltes Licht der Betriebswellenlänge λ₁ unterdrückt wird,
**dadurch gekennzeichnet, daß**
die Erfassungseinrichtung ein Ausgangssignal, abgibt, welches ein Maß für die Intensität und den Polarisationszüstand, gegebenenfalls als Funktion der Zeit,
und die Signallaufzeit des Reflexionssignals ist und aus welchem Übertragungseigenschaften der Übertragungsstrecke und/oder Änderungen der Übertragungseigenschaften, insbesondere durch Manipulationen an der Übertragungsstrecke, bestimmbar sind.

3. Verfahren nach Anspruch 1 oder 2, **dadurch gekennzeichnet,**
**daß** es während des normalen Übertragungsbetriebs durchgeführt wird, wobei das Kontrollsignal parallel zum Übertragungssignal in die Übertragungsstrecke eingekoppelt wird.

4. Verfahren nach einem der Ansprüche 1 bis 3, **dadurch gekennzeichnet, daß** das Kontrollsignal auf der Empfangsseite wellenlängenspezifisch weitestgehend reflektiert wird, vorzugsweise mit einem Reflexionsgrad von R > 95 %, und das Übertragungssignal weitestgehend transmittiert wird, vorzugsweise mit einem Transmissionsgrad von T > 95 %.

5. Verfahren nach einem der vorangegangenen Ansprüche, **dadurch gekennzeichnet,**
**daß** die Kontrollwellenlänge derart gewählt ist, daß sie wenigstens teilweise über den Mantel der optischen Faser übertragen wird, jedoch bei der Übertragung nicht wesentlich gedämpft wird.

6. Verfahren nach nach Anspruch 1, **dadurch gekennzeichnet,**
**daß** durch Auswertung des Reflexionssignals die spektrale Streckendämpfung und/oder die Polarisationsmodendispersion bestimmt wird.

7. Verfahren nach nach Anspruch 2, **dadurch gekennzeichnet,**
**daß** durch Auswertung des Reflexionssignals die chromatische Dispersion der Faser, insbesondere die Nulldispersionwellenlänge λ₀ der Anstieg der Dispersionskurve bei λ₀ und/oder die Dispersionswerte im zweiten oder dritten optischen Fenster, und/oder die spektrale Streckendämpfung und/oder die Polarisationsmodendispersion bestimmt wird.

8. Verfahren nach einem der vorangegangenen Ansprüche, **dadurch gekennzeichnet,**
**daß** das zeitabhängige Ausgangssignal der Erfassungseinrichtung zur Unterdrückung statistischer Fluktuationen gefiltert wird, vorzugsweise die Bandbreite des Ausgangssignals auf Frequenzen im Bereich zwischen etwa 0,1 und 100 Hz begrenzt wird.

9. Anordnung zur Durchführung von Überwachungsmessungen an optischen Übertragungsstrecken (101, 111, 201, 301), wie einzelnen optischen Fasern oder Faserbündeln, wobei die Übertragungsstrecke eine Sende- und eine Empfangsseite aufweist und an der Sendeseite ein optisches Übertragungssignal mit einer Betriebswellenlänge λ₁ in die Übertragungsstrecke eingekoppelt und über diese übertragen wird, mit
einem Sender (103, 302) zur Erzeugung eines optischen Kontrollsignals mit
einer von der Betriebswellenlänge λ₁ verschiedenen. Kontrollwellenlänge λ₂, der auf der Sendeseite der Übertragungsstrecke angeordnet ist;
einem Koppler (114, 306), der Übertragungs- und Kontrollsignal sendeseitig in die Übertragungsstrecke einzukoppeln imstande ist;
einer Reflexionsanordnung (108, 112, 202, 304), welche auf der Empfangsseite der Übertragungsstrecke angeordnet ist und die kontrollwellenlänge zu reflektieren imstande ist, wobei das durch das rückreflektierte Kontrollsignal gebildete Reflexionssignal empfangsseitig wieder in die Übertragungsstrecke eingekoppelt wird;
**gekennzeichnet durch**
eine Erfassungseinrichtung (105, 303) zur Erfassung von Parametern des Reflexionssignals, die auf der Sendeseite der Übertragungsstrecke angeordnet und ein Ausgangssignal abzugeben imstande ist, welches eia Maß für die Intensität und den Polarisationszustand, gegebenenfalls als Funktion der Zeit, und die Signallaufzeit des Reflexionssignals ist.

10. Anordnung nach Anspruch 9, **dadurch gekennzeichnet,**
**daß** der Koppler ein breitbandiger Multiplexkoppler bzw. Y-Koppler ist.

11. Anordnung nach Anspruch 9 oder 10, **dadurch gekennzeichnet,**
**daß** die Reflexionsanordnung einen dichroitischen Spiegel (109, 203) umfaßt, welcher Strahlung im Bereich der Betriebswellenlänge λ₁ transmittiert und Strahlung im Bereich der Kontrollwellenlänge λ₂ reflektiert.

12. Anordnung nach Anspruch 9, **dadurch gekennzeichnet,**
**daß** die Reflexionsanordnung einen Multiplexkoppler (113) bzw. Demultiplexer mit wenigstens zwei wellenlängenabhängigen Ausgängen umfaßt, wobei der Ausgang für Strahlung im Bereich der Betriebswellenlänge mit einem Empfänger für Übertragungssignale oder einer weiteren Übertragungsstrecke gekoppelt und am Ausgang für Strahlung im Bereich der Kontrollwellenlänge ein die Kontrollwellenlänge λ₂ hochreflektierender Spiegel (115) angeordnet ist.

13. Anordnung nach einem der Ansprüche 9 bis 12, **dadurch gekennzeichnet,**
**daß** sie einen Zirkulator (104) umfaßt, welcher im Bereich des sendeseitigen Endes der Übertragungsstrecke angeordnet ist, zur sendeseitigen Einkopplung des Übertragungs- und Kontrollsignals in die Übertragungsstrecke und zur sendeseitigen Auskopplung des Reflexionssignals aus der Übertragungsstrecke.

14. Anordnung nach einem der Ansprüche 9 bis 12, **dadurch gekennzeichnet,**
**daß** der zweite Sender (302) einen Optical Time Domain Reflectometer, OTDR, umfaßt, welcher mit einer Signalquelle, insbesondere einem Laser, zur Erzeugung des Kontrollsignals und einem Empfänger zum Empfang des Reflexionssignals ausgestattet ist, und der ODTR somit auch ais Erfassungseinrichtung (303) fungiert.

15. Anordnung nach Anspruch 14, **dadurch gekennzeichnet,**
**daß** vor dem Ein- bzw. Ausgang des ODTR ein Filter (307) angeordnet ist, welches die Betriebswellenlänge unterdrückt und die Kontrollwellenlänge transmittiert.

16. Anordnung nach einem der Ansprüche 9 bis 15, **dadurch gekennzeichnet,**
**daß** die Erfassungseinrichtung (105, 303) einen Detektor umfaßt, der Strahlung im Bereich der Kontrollwellenlänge zu detektieren und ein elektrisches Ausgangssignal abzugeben imstande ist, welches ein Maß für die Intensität der auf den Detektor fallenden Strahlung ist.

17. Anordnung nach einem der Ansprüche 9-16, **dadurch gekennzeichnet,**
**daß** die Erfassungseinrichtung ein polarisationsempfindliches Element, wie Polarisator, Polarisationsstrahlteiler, polarisierender Faserkoppler, umfaßt zur Erfassung von wenigstens einer Komponente des Stokesvektors des Reflexionssignals.

18. Anordnung nach einem der Ansprüche 9-17, **dadurch gekennzeichnet,**
**daß** die Erfassungseinrichtung ein den vollständigen Polarisationszustand und damit den vollständigen Stokesvektor des Reflexionssignals erfassendes Polarimeter umfaßt.

## Claims

1. Method for performing check measurements on optical transmission links (101, 11 1, 201, 301), such as individual optical fibres or fibre bundles, with a transmitting end and a receiving end, wherein
a transmission signal is transmitted over the transmission link in the form of optical signals with an operating wavelength λ₁;
an optical check signal with a check wavelength λ₂ different from the operating wavelength λ₁ is coupled into the transmission link at the transmitting end, the incoupling mechanism being selected such that the parallel incoupling of the transmission signal is possible;
the check signal is reflected at the receiving end and is transmitted via the transmission link back to the transmitting end; and
the reflection signal formed by the back-reflected check signal is coupled out of the transmission link at the transmitting end and is supplied to a measuring means (105, 303), the incoupling of the check and transmission signals being substantially uninfluenced by the outcoupling of the reflection signal and any outcoupled light of operating wavelength λ₁ being suppressed, wherein
a) the measuring means supplies an output signal which is a measure of the intensity and/or polarization state, where applicable as a function of time, and/or signal propagation time of the reflection signal and from which it is possible to determine transmission characteristics of the transmission link and/or changes in the transmission characteristics, especially those caused by manipulations on the transmission link; and
b) the chromatic dispersion of the fibre, especially the zero-dispersion wavelength λ₀ and rise of the dispersion curve at λ₀ and/or the dispersion values in the second or third optical window, is determined through evaluation of the reflection signal.

2. Method for performing monitoring measurements on optical transmission links (101, 111, 201, 301), such as individual optical fibres or fibre bundles, with a transmitting end and a receiving end, wherein
a transmission signal is transmitted over the transmission link in the form of optical signals with an operating wavelength λ₁;
an optical check signal with a check wavelength λ₂ different from the operating wavelength λ₁ is coupled into the transmission link at the transmitting end, the incoupling mechanism being selected such that the parallel incoupling of the transmission signal is possible;
the check signal is reflected at the receiving end and is transmitted via the transmission link back to the transmitting end;
the reflection signal formed by the back-reflected check signal is coupled out of the transmission link at the transmitting end and is supplied to a measuring means (105, 303), the incoupling of the check and transmission signals being substantially uninfluenced by the outcoupling of the reflection signal and any outcoupled light of operating wavelength λ₁ being suppressed,
**characterized in that**
the measuring means supplies an output signal which is a measure of the intensity and polarization state, where applicable as a function of time, and signal propagation time of the reflection signal and from which it is possible to determine transmission characteristics of the transmission link and/or changes in the transmission characteristics, especially those caused by manipulations on the transmission link.

3. Method according to claim 1 or 2, **characterized in that**
said method is performed during normal transmission operation, the check signal being coupled into the transmission link in parallel with the transmission signal.

4. Method according to any one of claims 1 to 3, **characterized in that**
the check signal is reflected to the maximum possible extent at the receiving end on a wavelength-specific basis, preferably with a reflectance of R > 95%, and the transmission signal is transmitted to the maximum possible extent, preferably with a transmittance of T > 95%.

5. Method according to any one of the preceding claims, **characterized in that**
the check wavelength is selected such that it is transmitted at least partially through the sheath of the optical fibre, but is not significantly attenuated during transmission.

6. Method according to claim 1, **characterized in that**
the spectral link attenuation and/or polarization mode dispersion is determined through evaluation of the reflection signal.

7. Method according to claim 2, **characterized in that**
the chromatic dispersion of the fibre, especially the zero-dispersion wavelength λ₀, the rise of the dispersion curve at λ₀ and/or the dispersion values in the second or third optical window, and/or the spectral link attenuation and/or polarization mode dispersion is determined through evaluation of the reflection signal.

8. Method according to any one of the preceding claims, **characterized in that**
the time-dependent output signal of the measuring means is filtered for the suppression of statistical fluctuations, preferably the bandwidth of the output signal being limited to frequencies in the range between approximately 0.1 and 100 Hz.

9. Arrangement for the performance of monitoring measurements on optical transmission links (101, 111, 201, 301), such as individual optical fibres or fibre bundles, the transmission link comprising a transmitting end and a receiving end and an optical transmission signal with an operating wavelength λ₁ being coupled into the transmission link at the transmitting end and being transmitted via said transmission link, with
a transmitter (103, 302) for generating an optical check signal with a check
wavelength λ₂ different from the operating wavelength λ₁, said transmitter (103, 302) being disposed at the transmitting end of the transmission link;
a coupler (114, 306), said coupler (114, 306) being capable of coupling transmission and check signals into the transmission link at the transmitting end;
a reflection arrangement (108, 112, 202, 304), said reflection arrangement (108, 112, 202, 304) being disposed at the receiving end of the transmission link and being capable of reflecting the check wavelength, the reflection signal formed by the back-reflected check signal being coupled back into the transmission link at the receiving end,
**characterized by**
a measuring means (105, 303) for measuring parameters of the reflection signal, said measuring means (105, 303) being disposed at the transmitting end of the transmission link and being capable of supplying an output signal which is a measure of the intensity and polarization state, where applicable as a function of time, and signal propagation time of the reflection signal.

10. Arrangement according to claim 9, **characterized in that**
the coupler is a broadband multiplex coupler or Y-coupler.

11. Arrangement according to claim 9 or 10, **characterized in that**
the reflection arrangement comprises a dichroic mirror (109, 203), said dichroic mirror (109, 203) transmitting radiation in the range of the operating wavelength λ₁ and reflecting radiation in the range of the check wavelength λ₂

12. Arrangement according to claim 9, **characterized in that**
the reflection arrangement comprises a multiplex coupler (113) and/or demultiplexer with at least two wavelength-dependent outputs, the output for radiation in the range of the operating wavelength being coupled with a receiver for transmission signals or with a further transmission link and a mirror (115) of high reflectance for the check wavelength λ₂ being disposed at the output for radiation in the range of the check wavelength.

13. Arrangement according to any one of claims 9 to 12, **characterized in that**
said arrangement comprises a circulator (104), disposed in the region of the transmitting end of the transmission link, for the transmission-end incoupling of the transmission and check signals into the transmission link and for the transmission-end outcoupling of the reflection signal out of the transmission link.

14. Arrangement according to any one of claims 9 to 12, **characterized in that**
the second transmitter (302) comprises an optical time domain reflectometer, OTDR, equipped with a signal source, especially a laser, for generating the check signal and with a receiver for receiving the reflection signal, the OTDR thus acting also as the measuring means (303).

15. Arrangement according to claim 14, **characterized in that**
disposed in front of the input and/or output of the OTDR is a filter (307), said filter (307) suppressing the operating wavelength and transmitting the check wavelength.

16. Arrangement according to any one of claims 9 to 15, **characterized in that**
the measuring means (105, 303) comprises a detector, said detector being capable of detecting radiation in the range of the check wavelength and being capable of supplying an electric output signal which is a measure of the intensity of the radiation striking the detector.

17. Arrangement according to any one of claims 9 to 16, **characterized in that**
the measuring means comprises a polarization-sensitive element, such as a polarizer, polarization beam splitter, polarizing fibre coupler, for measuring at least one component of the Stokes vector of the reflection signal.

18. Arrangement according to any one of claims 9 to 17, **characterized in that**
the measuring means comprises a polarimeter measuring the complete polarization state and therefore the complete Stokes vector of the reflection signal.

## Revendications

1. Procédé pour effectuer des mesures de contrôle sur des liaisons de transmission optiques (101, 111, 201, 301), telles que des fibres optiques individuelles ou des faisceaux de fibres, avec un côté d'émission et un côté réception, où un signal de transmission est transmis sur la liaison de transmission sous forme de signaux optiques par une longueur d'onde d'exploitation λ₁,
un signal de contrôle optique avec une longueur d'onde de contrôle λ₂, différente de la longueur d'onde d'exploitation λ₁, est injecté, du côté émission, dans la liaison de transmission, le mécanisme d'injection étant conçu de sorte qu'une injection parallèle du signal de transmission soit possible,
le signal de contrôle est reflété, du côté réception, et est renvoyé sur la liaison de transmission au côté émission et
le signal de réflexion formé par le signal de contrôle reflété est extrait, du côté émission, de la liaison de transmission et amené vers un équipement de saisie (105, 303), l'injection des signaux de contrôle et de transmission n'étant essentiellement pas influencée par l'extraction du signal de réflexion et la lumière extraite, le cas échéant, de la longueur d'onde d'exploitation λ₁ est supprimée, où
a) l'équipement de saisie émet un signal de sortie qui est une mesure de l'intensité et/ou de l'état de polarisation, le cas échéant en fonction du temps, et/ou du temps de propagation du signal de réflexion et sur la base de laquelle des propriétés de transmission de la liaison de transmission et/ou des changements desdites propriétés, notamment par suite de manipulations de la liaison de transmission, peuvent être déterminés et
b) l'évaluation du signal de réflexion permet de déterminer la dispersion chromatique de la fibre, notamment la longueur d'onde de dispersion nulle λ₀ et l'augmentation de la courbe de dispersion à λ₀ et/ou les valeurs de dispersion à la seconde ou la troisième fenêtre optique.

2. Procédé pour effectuer des mesures de contrôle sur des liaisons de transmission optiques (101, 111, 201, 301), telles que des fibres optiques individuelles ou des faisceaux de fibres, avec un côté d'émission et un côté réception, où un signal de transmission est transmis sur la liaison de transmission sous forme de signaux optiques par une longueur d'onde d'exploitation λ₁,
un signal de contrôle optique avec une longueur d'onde de contrôle λ₂, différente de la longueur d'onde d'exploitation λ₁, est injecté, du côté émission, dans la liaison de transmission, le mécanisme d'injection étant conçu de sorte qu'une injection parallèle du signal de transmission soit possible,
le signal de contrôle est reflété, du côté réception, et est renvoyé sur la liaison de transmission au côté émission et
le signal de réflexion formé par le signal de contrôle reflété est extrait, du côté émission, de la liaison de transmission et amené vers un équipement de saisie (105, 303), l'injection des signaux de contrôle et de transmission n'étant essentiellement pas influencée par l'extraction du signal de réflexion et la lumière extraite, le cas échéant, de la longueur d'onde d'exploitation λ₁ est supprimée,
**caractérisée en ce que**
l'équipement de saisie émet un signal de sortie qui est une mesure de l'intensité et/ou de l'état de polarisation, le cas échéant en fonction du temps, et/ou du temps de propagation du signal de réflexion et sur la base de laquelle des propriétés de transmission de la liaison de transmission et/ou des changements desdites propriétés, notamment par suite de manipulations de la liaison de transmission, peuvent être déterminés.

3. Procédé selon l'une des revendications 1 ou 2, **caractérisé en ce que**
ledit procédé est effectué pendant l'exploitation de transmission normale, le signal de contrôle étant injecté, parallèlement au signal de transmission, dans la liaison de transmission.

4. Procédé selon l'une des revendications 1 à 3, **caractérisé en ce que**
le signal de contrôle est largement reflété, du côté réception, en fonction de la longueur d'onde, de préférence avec un degré de réflexion de R > 95%, et le signal de transmission est largement transmis, de préférence avec un degré de transmission de T > 95%.

5. Procédé selon l'une des revendications précédentes, **caractérisé en ce que** la longueur d'onde de contrôle est conçue de sorte qu'elle soit transmise, du moins partiellement, sur la gaine de la fibre optique sans qu'elle soit essentiellement affaiblie lors de la transmission.

6. Procédé selon la revendication 1, **caractérisé en ce que**
l'évaluation du signal de réflexion permet de déterminer l'affaiblissement spectral et/ou la dispersion de mode de polarisation.

7. Procédé selon la revendication 2, **caractérisé en ce que**
l'évaluation du signal de réflexion permet de déterminer la dispersion chromatique de la fibre, notamment la longueur d'onde de dispersion nulle λ₀, l'augmentation de la courbe de dispersion à λ₀ et/ou les valeurs de dispersion à la seconde ou la troisième fenêtre optique et/ou l'affaiblissement spectral et/ou la dispersion de mode de polarisation.

8. Procédé selon l'une des revendications précédentes, **caractérisé en ce que**
le signal de sortie, fonction du temps, de l'équipement de saisie destiné à supprimer les fluctuations statistiques est filtré, de préférence la largeur de bande du signal de sortie sur des fréquences dans la bande comprise entre 0,1 et 100 Hz environ.

9. Disposition pour effectuer des mesures de surveillance sur des liaisons de transmission optiques (101, 111, 201, 301), telles que des fibres optiques individuelles ou des faisceaux de fibres, où la liaison de transmission présente un côté émission et un côté réception, et où un signal de transmission optique avec une longueur d'onde d'exploitation λ₁ est injecté dans et transmis sur la liaison de transmission du côté émission, avec
un émetteur (103, 303) destiné à générer un signal de contrôle optique avec une
longueur d'onde de contrôle λ₂, différente de la longueur d'onde d'exploitation λ₁, qui est disposé du côté émission de la liaison de transmission;
un coupleur (114, 306) capable d'injecter les signaux de transmission et de contrôle du côté émission dans la liaison de transmission;
une disposition de réflexion (108, 112, 202, 304) placée du côté réception de la liaison de transmission et capable de refléter la longueur d'onde de contrôle, le signal de réflexion formé par le signal de contrôle reflété étant réinjecté, du côté réception, dans la liaison de transmission;
**caractérisée en ce que**
un équipement de saisie (105, 303) destiné à saisir des paramètres du signal de réflexion disposé du côté émission de la liaison de transmission et capable d'émettre un signal de sortie qui est une mesure de l'intensité et l'état de polarisation, le cas échéant en fonction du temps, et le temps de propagation du signal de réflexion.

10. Disposition selon la revendication 9, **caractérisée en ce que**
le coupleur est un coupleur de multiplexage à large bande ou un coupleur en Y.

11. Disposition selon l'une des revendications 9 ou 10, **caractérisée en ce que**
la disposition de réflexion comporte un miroir dichroïque (109, 203) qui transmet les rayons dans la gamme de la longueur d'onde d'exploitation λ₁ et reflète les rayons dans la gamme de la longueur d'onde de contrôle λ₂

12. Disposition selon la revendication 9, **caractérisée en ce que**
la disposition de réflexion comporte un coupleur de multiplexage (113) ou un démultiplexeur avec au moins deux sorties dépendant de la longueur d'onde, où la sortie de rayonnement dans la gamme de la longueur d'onde d'exploitation est couplée à un récepteur pour signaux de transmission ou à une autre liaison de transmission et un miroir hautement reflétant la longueur d'onde de contrôle λ₂ (115) est disposé à la sortie de rayonnement dans la gamme de la longueur d'onde de contrôle.

13. Disposition selon l'une des revendications 9 à 12, **caractérisée en ce que**
ladite disposition comporte un circulateur (104) disposé au bout, du côté émission, de la liaison de transmission pour l'injection, du côté émission, des signaux de transmission et de contrôle dans la liaison de transmission et pour l'extraction, du côté émission, du signal de réflexion de la liaison de transmission.

14. Disposition selon l'une des revendications 9 à 12, **caractérisée en ce que**
le second émetteur (302) comporte un réflectomètre optique à balayage temporel (OTDR) équipé d'une source de signal, notamment d'un laser, pour la génération du signal de contrôle et d'un récepteur pour la réception du signal de réflexion, l'OTDR fonctionnant ainsi également comme équipement de saisie (303).

15. Disposition selon la revendication 14, **caractérisée en ce que**
un filtre (307) est disposé avant l'entrée et la sortie de l'OTDR qui supprime la longueur d'onde d'exploitation et transmet la longueur d'onde de contrôle.

16. Disposition selon l'une des revendications 9 à 15, **caractérisée en ce que** l'équipement de saisie (105, 303) comporte un détecteur capable de détecter le rayonnement dans la gamme de la longueur d'onde et d'émettre un signal de sortie électrique qui est une mesure de l'intensité du rayonnement faisant incidence sur le détecteur.

17. Disposition selon l'une des revendications 9 à 16, **caractérisée en ce que** l'équipement de saisie comporte un élément sensible à la polarisation, tel qu'un polarisateur, un diviseur de faisceaux de polarisation ou des coupleurs de fibres polarisants, destiné à saisir au moins une composante du vecteur de Stokes du signal de réflexion.

18. Disposition selon l'une des revendications 9 à 17, **caractérisée en ce que** l'équipement de saisie comporte un polarimètre mesurant l'état de polarisation entier, donc le vecteur de Stokes entier du signal de réflexion.
